# EUROPÄISCHE PATENTSCHRIFT

(11) **EP 4 232 300 B1**
(45) Veröffentlichungstag und Bekanntmachung des Hinweises auf die Patenterteilung: **21.08.2024**
(21) Anmeldenummer: 21811276.1
(22) Anmeldetag: 10.11.2021
(51) Int. Cl.: B60B 35/10, B60G 3/02, B66F 9/075

(54) **FAHRGESTELL UND DESSEN VERWENDUNG**
CHASSIS AND ITS USE
CHÂSSIS ET SON UTILISATION

(30) Priorität: 20.11.2020 DE 102020130811
(43) Veröffentlichungstag der Anmeldung: 30.08.2023
(73) Patentinhaber: Teupen Maschinenbau GmbH, 48599 Gronau (DE)
(72) Erfinder: RITZENHÖFER, Tobias, 48624 Schöppingen (DE)
(74) Vertreter: Grape & Schwarzensteiner
(86) Internationale Anmeldenummer: PCT/EP2021/081248
(87) Internationale Veröffentlichungsnummer: WO 2022/106280

(56) Entgegenhaltungen:
- EP-A1- 3 406 805
- EP-A1- 3 437 962
- EP-B1- 2 641 860
- WO-A1-2005/056308
- CN-A- 106 080 833

## Beschreibung

Die Erfindung betrifft ein Fahrgestell, ein Verfahren zum Betrieb einer mobilen oder selbstfahrenden Arbeitsmaschine, Arbeitsbühne oder dergleichen mit einem solchen Fahrgestell und dessen Verwendung.

Derartige Fahrgestelle bzw. Chassis sind allgemein bekannt. Diese Fahrgestelle bzw. Chassis finden beispielsweise als Untergestelle von mobilen oder selbstfahrenden Arbeitsmaschinen, Arbeitsbühnen oder dergleichen, auch als sogenannte Boom Lifts bezeichnet, Verwendung. Diese Fahrgestelle umfassen üblicherweise eine Basis und vier über jeweils eine Stützvorrichtung an der Basis angeordnete Räder. Die Räder sind aus einer Transportstellung in eine Arbeitsstellung des Fahrgestelles, und umgekehrt, verbringbar. In der Transportstellung weisen die Fahrgestelle eine geringere Breite als in der Arbeitsstellung auf. Die Stützvorrichtungen dienen daher einer Breitenverstellung der Fahrgestelle. Ein solches Fahrgestell bzw. Chassis ist zum Beispiel aus der EP 2 641 860 B1 bekannt. In der Praxis hat sich die Mimik der Stützvorrichtungen als nachteilig herausgestellt. So erfolgt eine Breitenverstellung ausschließlich durch Aus- bzw. Einfahren von teleskopierbaren Stütz- oder Tragarmen senkrecht zur Längsachse des Fahrgestelles und den vier Rädern. Dadurch werden die einzelnen Bauteile wie die Räder oder das Fahrgestell selbst beim Verbringen des Fahrgestelles aus seiner Transportstellung in seine Arbeitsstellung, und umgekehrt, mit ausgesprochen großen Querkräften beaufschlagt. Dies macht einerseits eine Überdimensionierung sämtlicher Bauteile, einschließlich etwa zum Aus- und Einfahren der Stütz- oder Tragarme vorgesehener Betätigungseinrichtungen, erforderlich. Dies wiederum führt zu einer Erhöhung des Eigengewichtes des Fahrgestelles und gleichzeitig einer Verminderung des maximal zulässigen Arbeitsgewichtes in/während dessen Betrieb. Andererseits wirkt sich die ständige Belastungssituation auf die Lebensdauer des Fahrgestelles insgesamt nachteilig aus.

Darüber hinaus ist aus der EP 3 406 805 A1 ein Fahrgestell bekannt, das eine Basis und vier über jeweils eine Stützvorrichtung an der Basis angeordnete und aus einer Transportstellung in eine Arbeitsstellung des Fahrgestelles, und umgekehrt, verbringbare Räder umfasst. Jede Stützvorrichtung umfasst dabei einen Stütz- oder Tragarm, der über ein proximales Ende an der Basis aus der Transportstellung in die Arbeitsstellung des Fahrgestelles, und umgekehrt, verschwenkbar angeordnet ist, eine erste Betätigungseinrichtung zum Verschwenken des Stütz- oder Tragarmes aus der Transportstellung in die Arbeitsstellung des Fahrgestelles, und umgekehrt, einen an dem distalen Ende des Stütz- oder Tragarmes angeordneten Achsschenkel, eine Radachse, die an dem Achsschenkel verschwenkbar angeordnet ist und an einem distalen Ende des Achsschenkels das Rad drehbar aufnimmt, und eine zweite Betätigungseinrichtung zum Verschwenken der Radachse gegenüber dem Achsschenkel. Der Achsschenkel ist mit dem Stütz- oder Tragarm an dessen distalem Ende starr verbunden. Ein solches Fahrgestell ist auch in der CN 106 080 833 A beschrieben.

Schließlich ist in der EP 3 437 962 A1 ein Fahrgestell offenbart, bei welchem, wie im Übrigen auch bei dem Fahrgestell nach der EP 2 641 860 B1, eine Radachse unmittelbar an einem Stütz- oder Tragarm angeordnet ist.

Der vorliegenden Erfindung liegt daher die Aufgabe zugrunde, ein Fahrgestell zur Verfügung zu stellen, mit welcher sich die obigen Nachteile verhindern, welche mithin konstruktiv besonders einfach, zugleich kompakt und stabil ausgebildet ist, einer Beaufschlagung durch Querkräfte nicht oder zumindest nur sehr gering ausgesetzt ist, von erheblich reduziertem Gewicht ist sowie eine ausgesprochen hohe Lebensdauer aufweist, und nicht zuletzt aufgrund dessen ausgesprochen kostengünstig in dessen Betrieb ist, ein Verfahren zum Betrieb einer mobilen oder selbstfahrenden Arbeitsmaschine, Arbeitsbühne oder dergleichen mit einem solchen Fahrgestell und dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Fahrgestelles, umfassend eine Basis und vier über jeweils eine Stützvorrichtung an der Basis angeordnete und aus einer Transportstellung in eine Arbeitsstellung des Fahrgestelles, und umgekehrt, verbringbare Räder, wobei jede Stützvorrichtung einen Stütz- oder Tragarm, der über ein proximales Ende an der Basis aus der Transportstellung in die Arbeitsstellung des Fahrgestelles, und umgekehrt, verschwenkbar angeordnet ist, eine erste Betätigungseinrichtung zum Verschwenken des Stütz- oder Tragarmes aus der Transportstellung in die Arbeitsstellung des Fahrgestelles, und umgekehrt, einen an dem distalen Ende des Stütz- oder Tragarmes angeordneten Achsschenkel, eine Radachse, die an dem Achsschenkel verschwenkbar angeordnet ist und an einem distalen Ende des Achsschenkels das Rad drehbar aufnimmt, und eine zweite Betätigungseinrichtung zum Verschwenken der Radachse gegenüber dem Achsschenkel umfasst, wobei der Achsschenkel an dem distalen Ende des Stütz- oder Tragarmes drehbar angeordnet ist, wird eine besonders einfache, zudem kompakte und stabile Bauweise des Fahrgestelles bzw. Chassis insgesamt erreicht. Durch die konstruktive Möglichkeit einer Anstellung der Räder während einer Breitenverstellung des Fahrgestelles aus einer Transportstellung in eine Arbeitsstellung des Fahrgestelles, und umgekehrt, werden die Räder und sonstigen Bauteile des Fahrgestelles und letztlich das Fahrgestell an sich erheblich kleineren Querkräften ausgesetzt. Die Folgen sind eine Verminderung der Abmessungen der einzelnen Bauteile und des Fahrgestelles sowie damit einhergehend eine erhebliche Gewichtseinsparung dessen. Dementsprechend lässt sich eine wenig reparaturanfällige Ausgestaltung und nicht zuletzt daraus resultierend eine ausgesprochen hohe Lebensdauer des erfindungsgemäßen Fahrgestelles erreichen. Auch der Betrieb des erfindungsgemäßen Fahrgestelles lässt sich insgesamt ausgesprochen kostengünstig gestalten.

Weitere vorteilhafte Einzelheiten des erfindungsgemäßen Fahrgestelles sind in den Ansprüchen 2 bis 13 beschrieben.

Von besonderem Interesse sind die Merkmale des Anspruchs 2. Danach ist der Stütz- oder Tragarm an der Basis mit dem proximalen Ende über eine erste Drehachse aus der Transportstellung in die Arbeitsstellung des Fahrgestelles, und umgekehrt, drehbar angeordnet und mit dem Achsschenkel an dem distalen Ende über eine zweite Drehachse drehbar verbunden.

In diesem Zusammenhang ist es von besonderem Vorteil, dass die erste Betätigungseinrichtung zum Verschwenken des Stütz- oder Tragarmes nach Anspruch 3 aus der Transportstellung in die Arbeitsstellung des Fahrgestelles, und umgekehrt, an der Basis mit einem proximalen Ende über eine erste Drehachse drehbar angeordnet ist und mit dem Achsschenkel an einem distalen Ende über eine zweite Drehachse drehbar verbunden ist.

Entsprechend den Maßnahmen des Anspruchs 4 fallen die zweite Drehachse von Stütz- oder Tragarm und Achsschenkel und die zweite Drehachse von erster Betätigungseinrichtung und Achsschenkel vorzugsweise zusammen.

Von besonderem Interesse sind darüber hinaus die konstruktiven Maßnahmen des Anspruchs 5. Demzufolge ist/sind die erste Betätigungseinrichtung und/oder die zweite Betätigungseinrichtung längenverstellbar ausgebildet.

Weiterhin liegt es im Rahmen der Erfindung, dass die erste Betätigungseinrichtung und/oder die zweite Betätigungseinrichtung nach Anspruch 6 hydraulisch, pneumatisch, mechanisch oder elektrisch längenverstellbar ausgebildet ist/sind.

Darüber hinaus ist/sind die erste Betätigungseinrichtung und/oder die zweite Betätigungseinrichtung entsprechend Anspruch 7 vorzugsweise als, insbesondere teleskopierbare/r, Druckzylinder, Hydraulikeinheit, Lineareinheit, Spindeleinheit oder Linearmotor ausgebildet.

Von ganz besonders großer Bedeutung sind die Merkmale des Anspruchs 8, wonach jede Stützvorrichtung weiter eine Parallelführung umfasst, welche dem Stütz- oder Tragarm zugeordnet ist, mit einem proximalen Ende an der Basis drehbar angeordnet ist und an einem distalen Ende mit dem Achsschenkel drehbar verbunden ist. Durch die Parallelführung des erfindungsgemäßen Fahrzeuggestelles lassen sich auf einfache Weise eine Reihe von weiteren Vorteilen erzielen. Zum einen kann so die Stabilität des erfindungsgemäßen Fahrgestelles noch weiter erhöht und damit die Lebensdauer zusätzlich verbessert werden. Zum anderen lässt sich die Spurgenauigkeit und -treue des Fahrgestelles und somit eine vereinfachte, gleichermaßen sehr exakte Handhabung des Fahrgestelles im Betrieb erhalten. Schließlich stellt die Parallelführung einen ausgesprochen wirkungsvollen Schutz der ersten Betätigungseinrichtung gegen Beschädigung oder sogar vollständige Zerstörung durch eine Kollision mit möglichen Hindernissen auf dem Fahrweg des Fahrgestelles infolge Unachtsamkeit des Bedienungspersonals dar.

Des Weiteren ist erfindungsgemäß vorgesehen, dass die Parallelführung nach Anspruch 9 zwischen Stütz- und Tragarm und der Längsachse des Fahrgestelles angeordnet ist, vorzugsweise im Wesentlichen parallel zu dem Stütz- und Tragarm.

Entsprechend den Maßnahmen des Anspruchs 10 bildet die Parallelführung und der Stütz- und Tragarm zusammen mit der Basis und dem Achsschenkel etwa die Form eines Parallelogramms.

Entsprechend den Maßnahmen des Anspruchs 11 fallen eine erste Drehachse von Parallelführung und Basis und die erste Drehachse von erster Betätigungseinrichtung und Basis zusammen. Vorzugsweise ist/sind die Räder und/oder die erste Betätigungseinrichtung und/oder zweite Betätigungseinrichtung nach Anspruch 12 individuell, paarweise oder sämtlich gemeinsam steuerbar ausgebildet.

Weiterhin liegt es im Rahmen der Erfindung, dass die Basis des erfindungsgemäßen Fahrgestelles nach Anspruch 13 einen Drehteller, Drehkranz oder dergleichen Lagereinrichtung aufweist, über den ein Aufbau, Drehturm, Arbeitskorb, Arbeitsplattform oder sonstige Hebeeinrichtung für den Transport von Personen und Werkzeugen drehbar anordnenbar ist.

Diese Aufgabe wird des Weiteren auf überraschend einfache Weise in verfahrenstechnischer Hinsicht durch die Merkmale des Anspruchs 14 gelöst.

Demnach ist ein Verfahren zum Betrieb einer mobilen oder selbstfahrenden Arbeitsmaschine, Arbeitsbühne oder dergleichen mit einem Fahrgestell vorgeschlagen, bei welchem die Räder an Stützvorrichtungen jeweils über einen an einem distalen Ende eines Stütz- oder Tragarmes der Stützvorrichtungen drehbar angeordneten Achsschenkel zum Verbringen oder zur Breitenverstellung des Fahrgestelles aus der Transportstellung in die Arbeitsstellung, und umgekehrt, in einen Winkel zu der Längsachse des Fahrgestelles ausgerichtet werden, derart, dass die Räder jeweils, im Wesentlichen auf oder parallel zu einem Teilkreis, um welchen/auf welchem die Stützvorrichtungen verschwenkt oder bewegt werden, geführt oder ausgerichtet werden.

Schließlich liegt es noch im Rahmen der Erfindung, das Fahrgestell nach Anspruch 15 für mobile, fahrbare, heb- und senkbare, selbstfahrende Arbeitsmaschinen, Arbeitsbühnen, Arbeitskörbe, Arbeitsplattformen, Bagger, Maschinen zum Ausbaggern, Schreitbagger, Baugeräte und -maschinen, Boom Lifts, Erdbaumaschinen, Erdbohrer, Hebebühnen, Hebeeinrichtungen für den Transport von Personen und Gütern, Hebewerke, Hubarbeitsbühnen, Hubplattformen, Hubtische, Kräne, Drehkräne, Bau- und Lastkräne, Lastwagenkräne, Laufkräne, Portalkräne, Turmdrehkräne, Kran- oder Werkzeugaufsätze oder Halterungen für Werkzeugmaschinen zu verwenden.

Weitere Merkmale, Vorteile und Einzelheiten der Erfindung ergeben sich aus der nachfolgenden Beschreibung von bevorzugten Ausführungsformen der Erfindung sowie anhand der Zeichnungen. Hierbei zeigen:
- Fig. 1A und 1B: perspektivische Ansichten einer Ausführungsform eines erfindungsgemäß ausgebildeten Fahrgestelles in einer Transportstellung und in einer Arbeitsstellung,
- Fig. 2A bis 2D: Draufsichten auf die Ausführungsform des erfindungsgemäß ausgebildeten Fahrgestelles der Fig. 1A und 1B zur Verdeutlichung einer Breitenverstellung aus der Transportstellung, über eine erste und eine zweite Zwischenstellung in die Arbeitsstellung, und umgekehrt,
- Fig. 3A und 3B: schematische Draufsichten auf die Ausführungsform des erfindungsgemäß ausgebildeten Fahrgestelles entsprechend den Fig. 2A und 2B bzw. 2C und 2D,
- Fig. 4A bis 4C: eine Seitenansicht und zwei Schnittansichten durch die Ausführungsform des erfindungsgemäß ausgebildeten Fahrgestelles nach den Fig. 1A bis 3B gemäß der Linie IV-IV in der Fig. 4A,
- Fig. 5: eine schematische Draufsicht auf die Ausführungsform des erfindungsgemäß ausgebildeten Fahrgestelles entsprechend den Fig. 2A bis 2D,
- Fig. 6A und 6B: perspektivische Ansichten einer weiteren Ausführungsform eines erfindungsgemäß ausgebildeten Fahrgestelles in einer Transportstellung und in einer Arbeitsstellung,
- Fig. 7A bis 7D: Draufsichten auf die weitere Ausführungsform des erfindungsgemäß ausgebildeten Fahrgestelles der Fig. 6A und 6B zur Verdeutlichung der Breitenverstellung aus der Transportstellung, über eine erste und eine zweite Zwischenstellung in die Arbeitsstellung, und umgekehrt,
- Fig. 8A und 8B: schematische Draufsichten auf die weitere Ausführungsform des erfindungsgemäß ausgebildeten Fahrgestelles entsprechend den Fig. 7A und 7B bzw. 7C und 7D,
- Fig. 9A bis 9C: eine Seitenansicht und zwei Schnittansichten durch die Ausführungsform des erfindungsgemäß ausgebildeten Fahrgestelles nach den Fig. 6A bis 8B gemäß der Linie IX-IX in der Fig. 9A, und
- Fig. 10: eine schematische Draufsicht auf die Ausführungsform des erfindungsgemäß ausgebildeten Fahrgestelles entsprechend den Fig. 8A bis 8D.

Bei der nachfolgenden Beschreibung von verschiedenen Ausführungsformen eines erfindungsgemäß ausgebildeten Fahrgestelles 10 sind einander entsprechende, gleiche Bauteile jeweils mit identischen Bezugsziffern versehen.

Das erfindungsgemäße Fahrgestell 10 findet in vorteilhafter Weise für mobile, fahrbare, heb- und senkbare, selbstfahrende Arbeitsmaschinen, Arbeitsbühnen, Arbeitskörbe, Arbeitsplattformen, Bagger, Maschinen zum Ausbaggern, Schreitbagger, Baugeräte und -maschinen, Boom Lifts, Erdbaumaschinen, Erdbohrer, Hebebühnen, Hebeeinrichtungen für den Transport von Personen und Gütern, Hebewerke, Hubarbeitsbühnen, Hubplattformen, Hubtische, Kräne, Drehkräne, Bau- und Lastkräne, Lastwagenkräne, Laufkräne, Portalkräne, Turmdrehkräne, Kran- oder Werkzeugaufsätze oder Halterungen für Werkzeugmaschinen Verwendung.

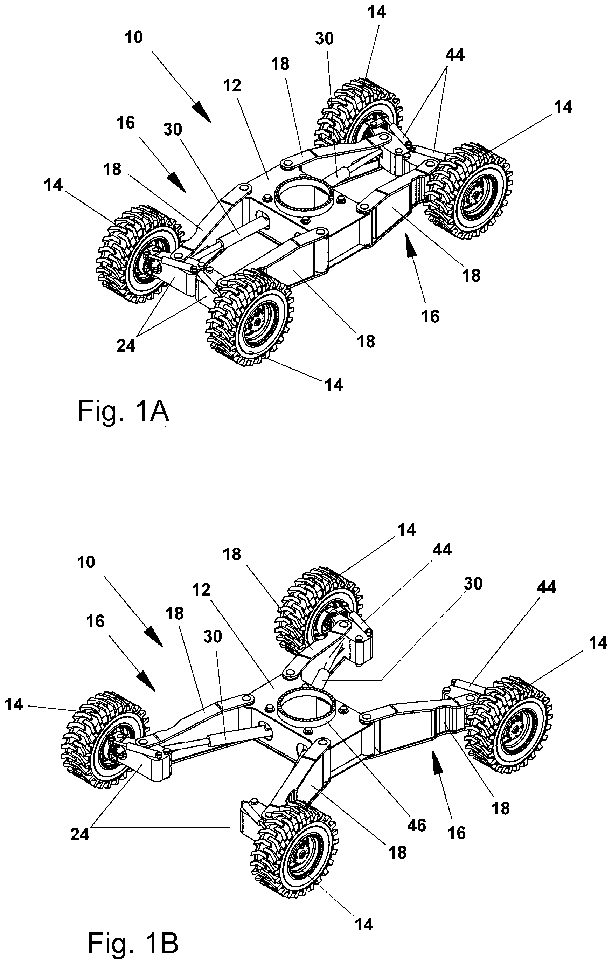

In den Fig. 1A bis 5 ist eine Ausführungsform eines erfindungsgemäßen Fahrgestelles 10 gezeigt, dessen Bauteile und Funktionsweise nachfolgend detailliert beschrieben werden.

Das Fahrgestell 10 umfasst demnach eine Basis 12 und vier Räder 14, die über jeweils eine Stützvorrichtung 16 an der Basis 12 angeordnet sind. Die vier Räder 14 sind mittels der Stützvorrichtung 16 aus einer Transportstellung entsprechend der Fig. 1A in eine Arbeitsstellung des Fahrgestelles 10 entsprechend der Fig. 1B verbringbar. In der Transportstellung besitzt das Fahrgestell 10 eine geringere Breite als in der Arbeitsstellung.

In der Arbeitsstellung nimmt eine Arbeitsmaschine (nicht gezeigt) den Normalbetrieb auf.

Ohne im Einzelnen weiter erläutert zu sein, können/werden die vier Räder 14 nach erfolgtem Einsatz und Beendigung des Normalbetriebes der Arbeitsmaschine gleichermaßen wiederum mittels der jeweiligen Stützvorrichtung 16 aus der Arbeitsstellung des Fahrgestelles 10 entsprechend der Fig. 1B zurück in die Transportstellung entsprechend der Fig. 1A übergeführt (werden), um das Fahrgestell 10 dann beispielsweise auf einem Tieflader eines Lastkraftwagens zur Überführung an den nächsten Einsatzort transportieren zu können.

Jede Stützvorrichtung 16 umfasst einen Stütz- oder Tragarm 18.

Der Stütz- oder Tragarm 18 ist über ein proximales Ende 20 an der Basis 12 aus der Transportstellung in die Arbeitsstellung des Fahrgestelles 10, und umgekehrt, verschwenkbar angeordnet. Weiterhin nimmt der Stütz- oder Tragarm 18 an einem distalen Ende 22 einen Achsschenkel 24 drehbar auf.

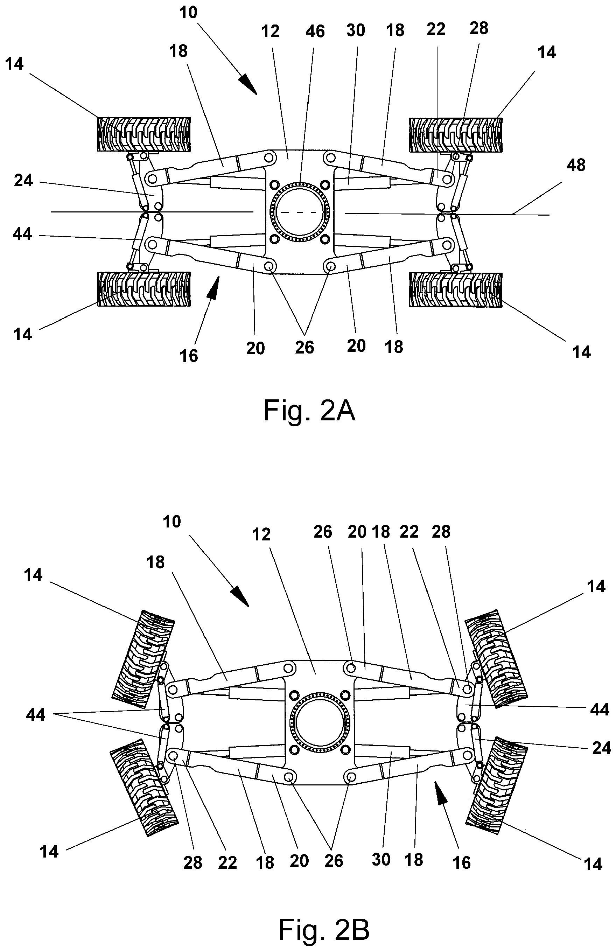

Wie aus den Fig. 2A bis 3B und 4B bis 5 hervorgeht, ist der Stütz- oder Tragarm 18 in diesem Zusammenhang an der Basis 12 mit dem proximalen Ende 20 über eine erste Drehachse 26 drehbar angeordnet. Darüber hinaus ist an dem distalen Ende 22 des Stütz- oder Tragarmes 18 eine zweite Drehachse 28 vorgesehen, über welche der Achsschenkel 24 an dem Stütz- oder Tragarm 18 angelenkt bzw. drehbar verbunden ist.

Des Weiteren umfasst jede Stützvorrichtung 16 eine erste Betätigungseinrichtung 30. Die erste Betätigungseinrichtung 30 ist zum Verschwenken des Stütz- oder Tragarmes 18 aus der Transportstellung in die Arbeitsstellung des Fahrgestelles 10, und umgekehrt, vorgesehen.

Die erste Betätigungseinrichtung 30 ist über ein proximales Ende 32 an der Basis 12 drehbar angeordnet und an einem distalen Ende 34 mit dem Achsschenkel 24 drehbar verbunden. Zu diesem Zweck ist eine erste Drehachse 36, die zwischen der Basis 12 und dem proximalen Ende 32 der ersten Betätigungseinrichtung 30 wirkt, und eine zweite Drehachse 38, die zwischen dem distalen Ende 34 und dem Achsschenkel 24 wirkt, vorgesehen.

Bei der Ausführungsform des Fahrgestelles der Fig. 1A bis 5 fallen die zweite Drehachse 28 von Stütz- oder Tragarm 18 und Achsschenkel 24 und die zweite Drehachse 38 von erster Betätigungseinrichtung 30 und Achsschenkel 24 zusammen. Dies vereinfacht die Konstruktion und ermöglicht zugleich eine weitergehende Gewichtseinsparung.

Wie zuvor bereits ausgeführt, umfasst jede Stützvorrichtung 16 weiter den Achsschenkel 24, der an dem distalen Ende 22 des Stütz- oder Tragarmes 18 drehbar angeordnet ist.

Darüber hinaus ist jede Stützvorrichtung 16 mit einer Radachse 40 ausgestattet, um das jeweils zugeordnete Rad 14 an einem distalen Ende 42 des Achsschenkels 24 drehbar aufzunehmen. Die Radachse 40 selbst ist an dem Achsschenkel 24 ebenfalls angelenkt, um bei einer Breitenverstellung bzw. Spurverbreiterung des Fahrgestelles 10 aus der Transportstellung in die Arbeitsstellung, und umgekehrt, sowie zur Lenkung des Fahrgestelles 10 im Normalbetrieb verschwenkt werden zu können.

Zum Verschwenken der Radachse 40 relativ zu dem Achsschenkel 24 weist jede Stützvorrichtung 16 schließlich eine zweite Betätigungseinrichtung 44 auf.

Mit der Ausgestaltung des Fahrgestelles 10 nach der Erfindung lässt sich eine besonders einfache, zudem kompakte und stabile Bauweise des Fahrgestelles 10 bzw. Chassis insgesamt erhalten. Durch die konstruktive Möglichkeit einer Anstellung der Räder 14 während der Breitenverstellung bzw. Spurverbreiterung des Fahrgestelles 10 aus der Transportstellung in die Arbeitsstellung des Fahrgestelles 10, und umgekehrt, werden die einzelnen Bauteile des Fahrgestelles 10 und letztlich das Fahrgestell 10 selbst mit vernachlässigbar kleinen Querkräften beaufschlagt. Folglich lassen sich die Abmessungen von Stütz- oder Tragarm 18, der ersten und zweiten Betätigungseinrichtungen 30, 44 oder sonstigen Bauteilen und des Fahrgestelles 10 insgesamt vermindern und damit Gewicht einsparen. Dementsprechend lässt sich eine wenig reparaturanfällige Ausgestaltung und nicht zuletzt daraus resultierend eine ausgesprochen hohe Lebensdauer des Fahrgestelles 10 erreichen. Auch der Betrieb des Fahrgestelles 10 ist hierdurch besonders kostengünstig.

Die erste Betätigungseinrichtung 30 und/oder die zweite Betätigungseinrichtung 44 ist/sind vorzugsweise längenverstellbar ausgebildet. Bevorzugterweise ist/sind die erste Betätigungseinrichtung 30 und/oder die zweite Betätigungseinrichtung 44 dabei hydraulisch, pneumatisch, mechanisch oder elektrisch längenverstellbar ausgebildet.

Als besonders vorteilhaft hat sich in diesem Zusammenhang ein, insbesondere teleskopierbarer, Druckzylinder, ganz bevorzugt ein Verstellzylinder oder Lenkzylinder, als erste Betätigungseinrichtung 30 bzw. zweite Betätigungseinrichtung 44 in der Praxis bewährt. Alternativ dazu wäre eine Ausbildung der ersten Betätigungseinrichtung 30 und/oder der zweiten Betätigungseinrichtung 44 als Hydraulikeinheit, Lineareinheit, Spindeleinheit oder Linearmotor ebenso von Vorteil.

Ohne im Einzelnen dargestellt zu sein, ist vorzugsweise eine individuelle, paarweise oder sämtlich gemeinsame Steuerung der Räder 14 und/oder der ersten Betätigungseinrichtung 30 und/oder der zweiten Betätigungseinrichtung 44 vorgesehen.

Schließlich ist die Basis 12 des erfindungsgemäßen Fahrgestelles 10 nach den Fig. 1A bis 5 mit einem - bevorzugt zentrisch angebrachten - Drehteller 46, Drehkranz oder dergleichen Lagereinrichtung versehen, wodurch auf dem Fahrgestell 10 ein Aufbau, Drehturm, Arbeitskorb, Arbeitsplattform oder sonstige Hebeeinrichtung für den Transport von Personen und Werkzeugen (sämtlich nicht dargestellt) drehbar anordnenbar ist.

Im Folgenden wird das erfindungsgemäße Verfahren zur Breitenverstellung bzw. Spurverbreiterung des Fahrgestelles 10 nach der Erfindung, zum Beispiel einer selbstfahrenden Arbeitsmaschine, aus der Transportstellung in die Arbeitsstellung anhand der Fig. 2A bis 2D näher erläutert:
In der Transportstellung, die in der Fig. 2A gezeigt ist, werden zunächst die Bremsen der Räder 14 geöffnet, so dass sich die Räder 14 im freien Umlauf befinden und frei drehen können. Damit lassen sich eine Belastung und Abnutzung der Räder 14 sowie Schleifspuren auf dem Boden bzw. Untergrund vermeiden.

Sodann werden die Räder 14 in einer ersten Zwischenstellung, die in der Fig. 2B dargestellt ist, in einen Winkel verbracht, der tangential an die (Teil-)Kreisbahn der jeweils zugeordneten Stütz- und Tragarme 18 anliegt. Eine exakte Steuerung erfolgt vorzugsweise über einen Winkel- oder auch Längensensor (nicht gezeigt), der sich in der zweiten Betätigungseinrichtung 44, etwa einem Lenkzylinder, befindet.

Mit anderen Worten werden die Räder 14 an den Stützvorrichtungen 16 jeweils zum Verbringen oder zur Breitenverstellung des Fahrgestelles 10 aus der Transportstellung in die Arbeitsstellung, und umgekehrt, jeweils in einen Winkel zu der Längsachse 48 des Fahrgestelles 10 ausgerichtet. Dabei werden die Räder 14 jeweils auf, im Wesentlichen auf oder parallel zu einem Teilkreis, um welchen/auf welchem die Stützvorrichtungen 16 aus der Transportstellung in die Arbeitsstellung, und umgekehrt, verschwenkt oder bewegt werden, geführt oder ausgerichtet.

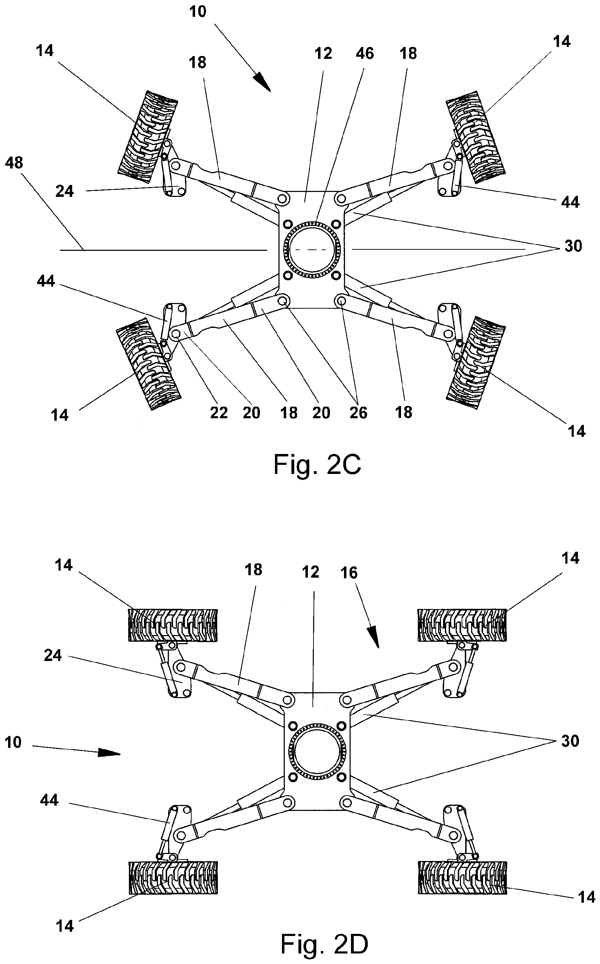

Entsprechend der Fig. 2C werden die Stütz- und Tragarme 18 anschließend durch die erste Betätigungseinrichtung 30, d.h. aus der Transportstellung bzw. der ersten Zwischenstellung, in welcher sich die Stütz- oder Tragarme 18 noch in etwa parallel zu der Längsachse 48 des Fahrgestelles 10 befinden, in eine zweite Zwischenstellung verbracht.

In der zweiten Zwischenstellung sind die Stütz- oder Tragarme 18 von der Längsachse 48 des Fahrgestelles 10 nach außen quasi weg (aus-)geklappt bzw. gespreizt. Dabei erfolgt eine genaue Steuerung wiederum vorzugsweise über den Winkel- oder auch Längensensor, der sich in der zweiten Betätigungseinrichtung 44 befindet. Die Räder 14 drehen einfach mit.

Nach der zweiten Zwischenstellung werden die Räder 14 schließlich in die/der Arbeitsstellung, wie der Fig. 2D zu entnehmen ist, über die zweiten Betätigungseinrichtungen 44, zum Beispiel die Lenkzylinder, wieder parallel zueinander bzw. zur Längsachse 48 gefahren. Auch dabei wird eine exakte Steuerung vorzugsweise erneut durch den Winkel- oder auch Längensensor in der zweiten Betätigungseinrichtung 44 durchgeführt.

In der Arbeitsstellung entsprechend der Fig. 2D werden die Bremsen der Räder 14 wieder geschlossen.

Das Verfahren zur Breitenverstellung bzw. Spurverbreiterung des erfindungsgemäßen Fahrgestelles 10 ist mithin beendet.

Die Arbeitsmaschine (nicht dargestellt) wechselt in den Normalbetrieb und steht dem Bedienungspersonal nunmehr zum vorgesehenen Arbeitseinsatz zur Verfügung.

Nach erfolgtem Einsatz und Beendigung des Normalbetriebes der Arbeitsmaschine gleichermaßen ist vorstehende Verfahrensweise in umgekehrter Reihenfolge durchzuführen. Die vier Räder 14 werden mithin über die jeweilige Stützvorrichtung 16 aus der Arbeitsstellung des Fahrgestelles 10 entsprechend der Fig. 1B zurück über die zwei Zwischenstellungen in die Transportstellung entsprechend der Fig. 1A übergeführt, um das Fahrgestell 10 dann beispielsweise auf einem Tieflader eines Lastkraftwagens zur Überführung an den nächsten Einsatzort transportieren zu können.

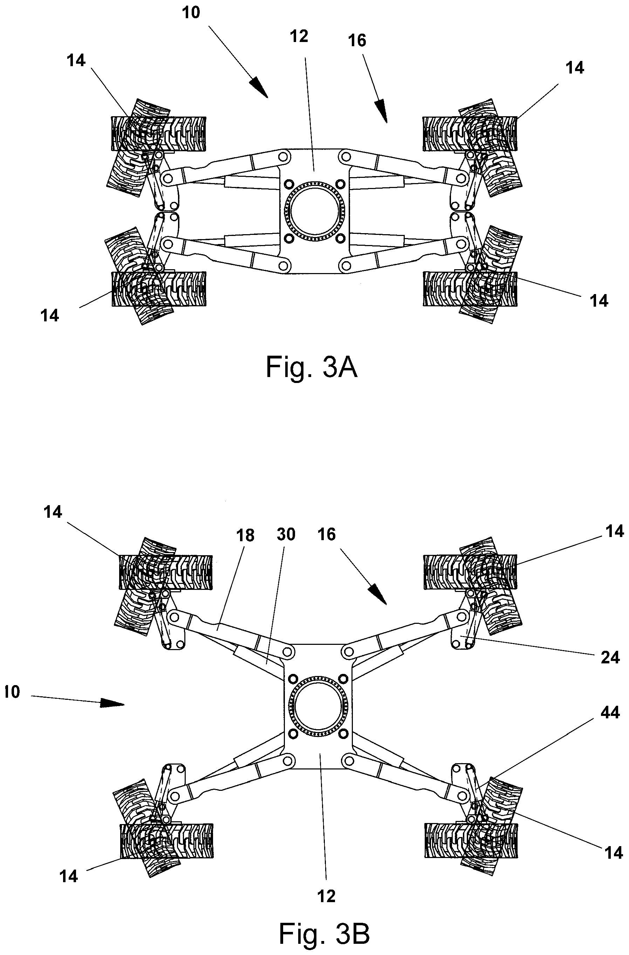

In den Fig. 3A bzw. 3B sind die jeweiligen Lenkeinstellungen der vier Räder 14 aus der Transportstellung in die erste Zwischenstellung bzw. letztlich aus der zweiten Zwischenstellung in die Arbeitsstellung des Fahrgestelles 10, und umgekehrt, schematisch dargestellt bzw. zusammengefasst.

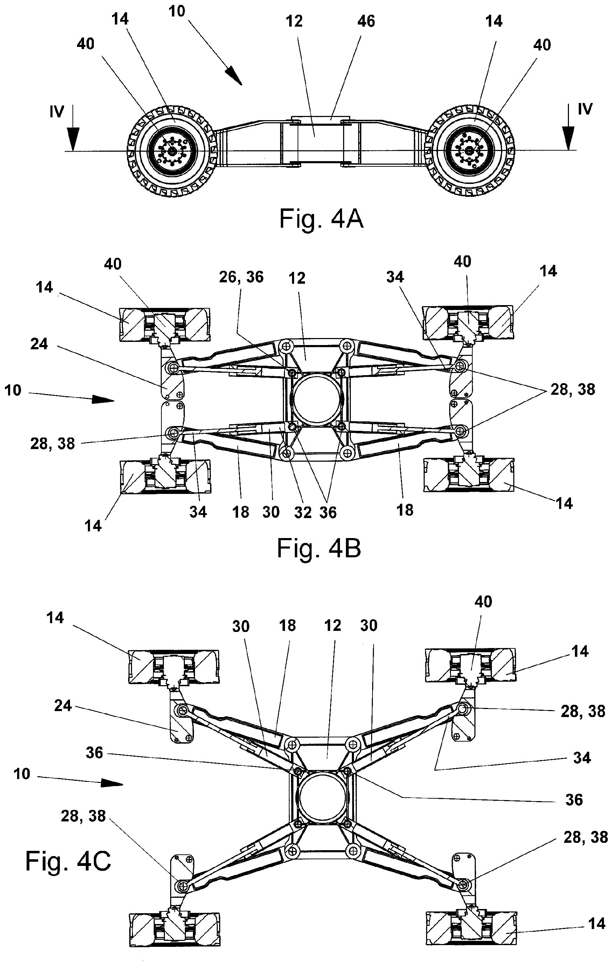

In den Fig. 4A bis 4C sind insbesondere die Anlenkungen der ersten Betätigungseinrichtung 30 verdeutlicht.

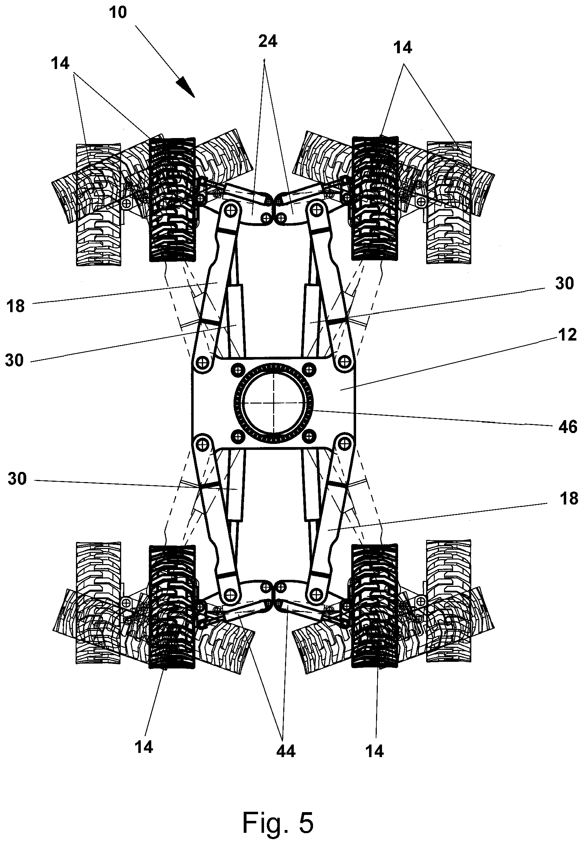

Die Fig. 5 zeigt schließlich noch sämtliche Lenkstellungen der vier Räder 14 und dazugehörigen Positionen der Stützvorrichtungen 16 (zum Teil strichliniert) in der Transportstellung, in den beiden Zwischenstellungen und in der Arbeitsstellung.

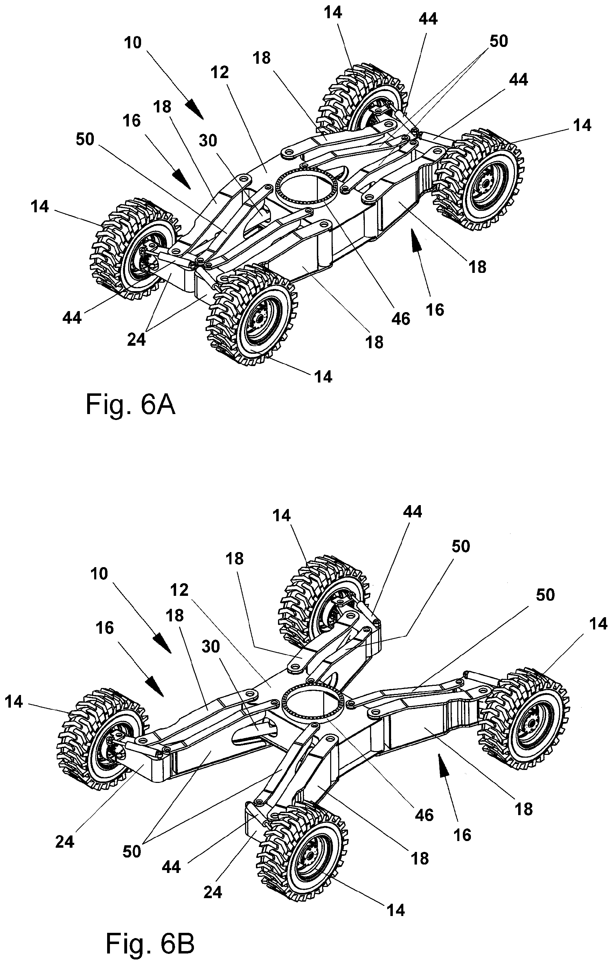

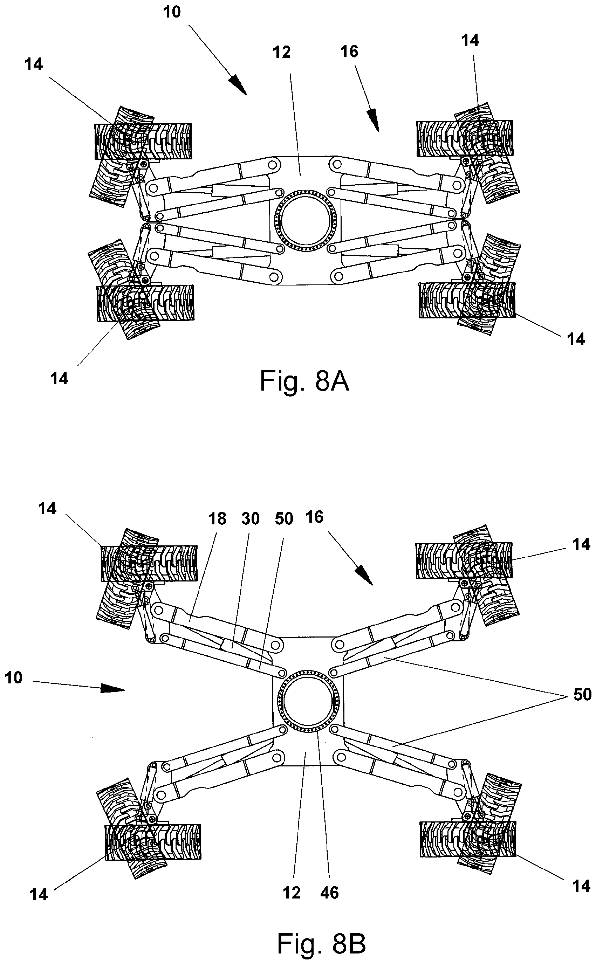

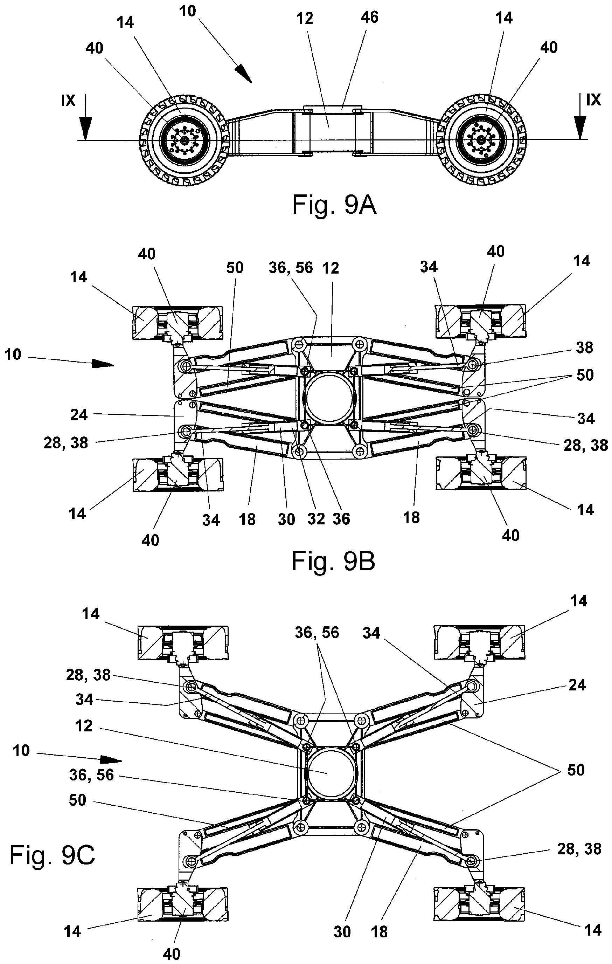

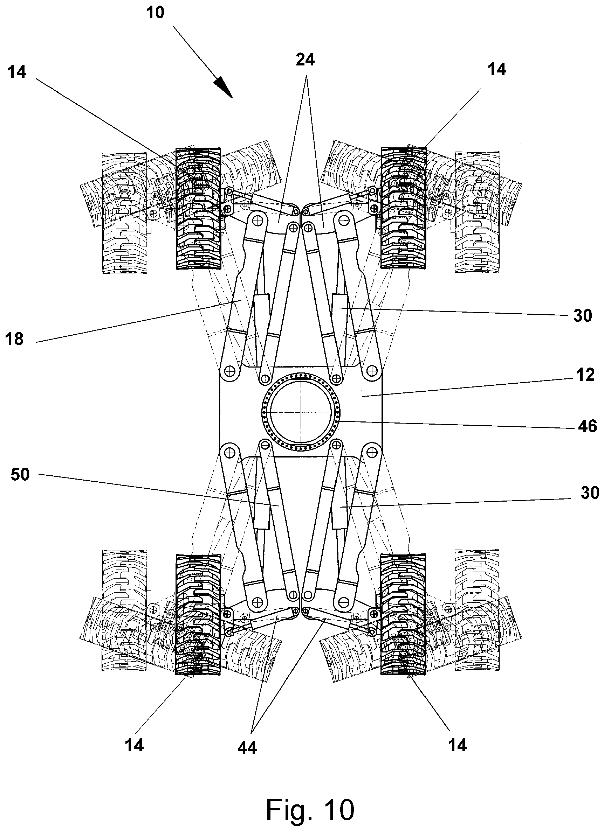

In den Fig. 6A bis 10 ist eine weitere Ausführungsform des erfindungsgemäßen Fahrgestelles 10 dargestellt.

Die Ausführungsform nach den Fig. 6A bis 10 unterscheidet sich von derjenigen der Fig. 1A bis 5 im Wesentlichen dadurch, dass jede Stützvorrichtung 16 zusätzlich eine Parallelführung 50 umfasst.

Die Parallelführungen 50, zum Beispiel in Form eines weiteren Stütz- oder Tragarmes, sind bei der Ausführungsform des Fahrgestelles 10, wie aus den Fig. 6A bis 10 hervorgeht, in ihren Abmessungen bzw. Dimensionierungen kleiner als die Stütz- oder Tragarme 18 ausgestaltet. Ohne im Einzelnen dargestellt zu sein, können die Parallelführungen 50 aber ebenso dieselben oder selbst größere Abmessungen bzw. Dimensionierungen wie die Stütz- oder Tragarme 18 aufweisen. Dies hängt wesentlich von den auftretenden Kraft- und Momentenverhältnissen ab und ist konstruktiv beliebig sowie individuell an die jeweiligen Belastungscharakteristiken des Fahrgestelles 12 anzupassen.

Obgleich sich die Ausführungsform des Fahrgestelles 10 der Fig. 1A bis 5 in der Praxis bereits ausgesprochen bewährt hat, kann mit den Parallelführungen 50 des erfindungsgemäßen Fahrzeuggestelles 10 die Stabilität des Fahrgestelles 10 insgesamt noch zusätzlich erhöht und dessen Lebensdauer verlängert werden. Des Weiteren wird dadurch eine verbesserte Spurgenauigkeit und -treue des Fahrgestelles 10 erreicht. Daraus resultiert zugleich eine vereinfachte, gleichermaßen sehr exakte Handhabung des Fahrgestelles 10 im Betrieb. Schließlich können die ersten Betätigungseinrichtungen 30 durch die Parallelführungen 50 gegen Beschädigung oder sogar vollständige Zerstörung geschützt werden, beispielsweise im Falle einer Kollision, wenn Hindernisse auf dem Fahrweg des Fahrgestelles 10 von dem Bedienungspersonal aus Unachtsamkeit übersehen werden.

Bei der in den Fig. 6A bis 10 gezeigten Ausführungsform des Fahrgestelles 10 ist jede Parallelführung 50 dem entsprechenden Stütz- oder Tragarm 18 zugeordnet. Dabei ist die Parallelführung 50 jeweils über ein proximales Ende 52 an der Basis 12 drehbar angeordnet und an einem distalen Ende 54 mit dem Achsschenkel 24 drehbar verbunden. Dazu sind eine erste Drehachse 56 zwischen der Basis 12 und dem proximalen Ende 52 der Parallelführung 50 und eine zweite Drehachse 58 zwischen dem distalen Ende 54 und dem Achsschenkel 24 vorgesehen.

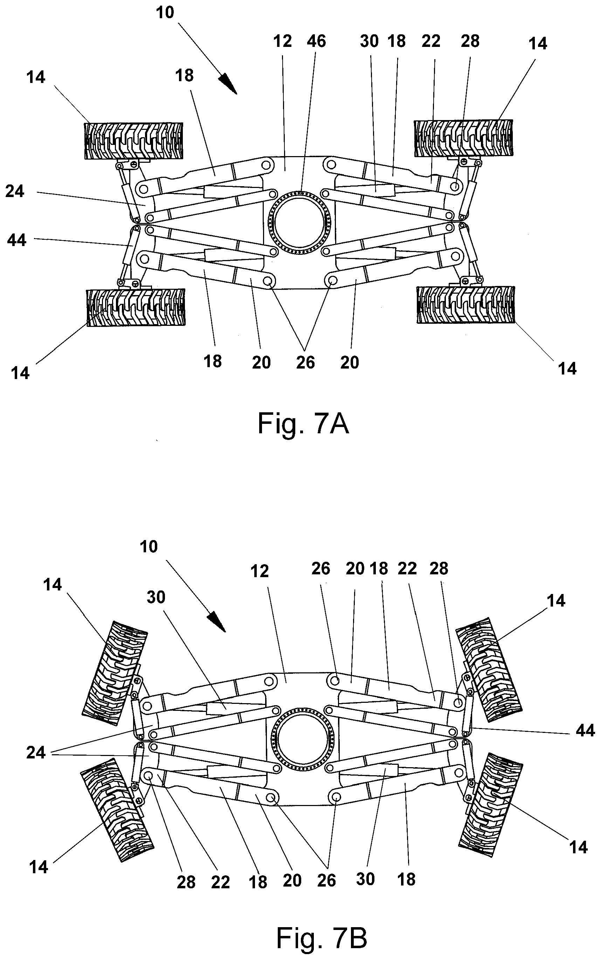

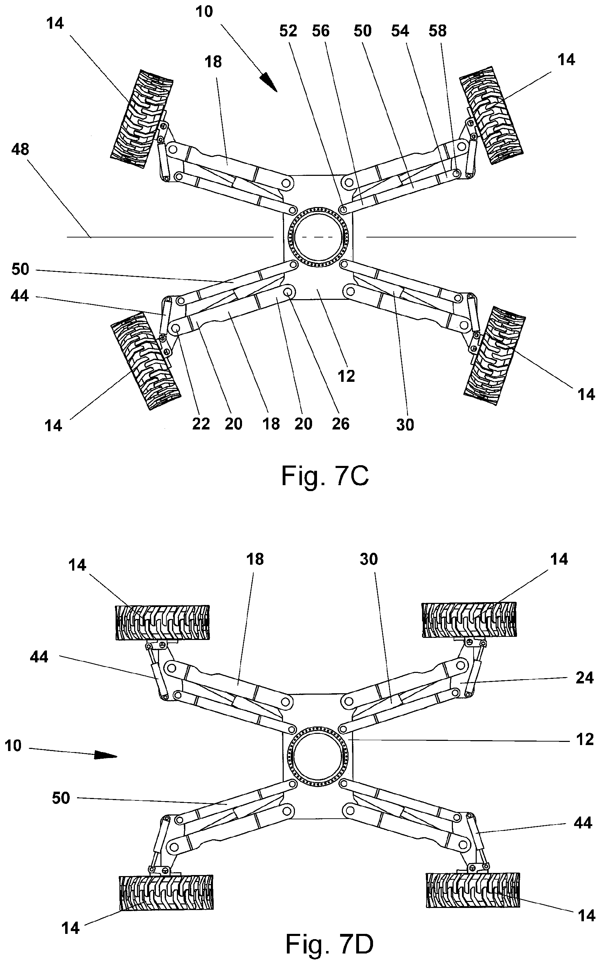

Wie insbesondere den Fig. 7A bis 8B und 9B bis 10 entnehmbar ist, ist die Parallelführung 50 zwischen dem Stütz- und Tragarm 18 und der Längsachse 48 des Fahrgestelles 10 angeordnet. Die Parallelführung 50 ist insbesondere im Wesentlichen parallel zu dem jeweiligen Stütz- und Tragarm 18 ausgerichtet. Vorzugsweise bilden die Parallelführung 50 und der Stütz- und Tragarm 18 dabei zusammen mit der Basis 12 und dem Achsschenkel 24 zum Beispiel ein Parallelogramm.

Bei der Ausführungsform des Fahrgestelles der Fig. 6A bis 10 fallen darüber hinaus die erste Drehachse 56 von Parallelführung 50 und Basis 12 und die erste Drehachse 36 von erster Betätigungseinrichtung 30 und Basis 12 zusammen. Dies vereinfacht die Konstruktion und ermöglicht eine Gewichtseinsparung.

Im Übrigen stimmen die beiden Ausführungsformen des erfindungsgemäßen Fahrgestelles 10 nach den Fig. 1A bis 5 und nach den Fig. 6A bis 10 überein. Insoweit wird auf die vorhergehende Beschreibung der Ausführungsform der Fig. 1A bis 5 verwiesen.

Die Erfindung ist nicht auf die dargestellten Ausführungsformen beschränkt. Ohne im Einzelnen dargestellt zu sein, ist es möglich, die verschiedenen Ausführungsformen des erfindungsgemäßen Fahrgestelles 10 bzw. Chassis und dessen einzelnen Bauteile untereinander bzw. miteinander individuell und beliebig zu kombinieren. Gleiches gilt für die erfindungsgemäße/n Verfahren und dessen Verwendung. So ist es beispielsweise möglich, auf/an dem Achsschenkel 24 die zweite Drehachse 28 von Stütz- oder Tragarm 18 und Achsschenkel 24 und die zweite Drehachse 38 von erster Betätigungseinrichtung 30 und Achsschenkel 24 voneinander getrennt auszubilden. Im Gegensatz zu den dargestellten Ausführungsbeispielen des erfindungsgemäßen Fahrgestelles 10 gemäß den Fig. 1A bis 10, bei welchen die Drehachsen 28, 38 und 36, 56 jeweils zusammenfallen, ist es - ohne im Einzelnen dargestellt zu sein - ebenso möglich, die Drehachsen 28 und 38 und/oder die Drehachsen 36 und 56 jeweils einzeln bzw. individuell, d.h. voneinander unabhängig, also nicht zusammenfallend, auszubilden sowie an unterschiedlicher Stelle an Basis 12 und Achsschenkel 24 anzuordnen.

## Patentansprüche

1. Fahrgestell, umfassend eine Basis (12) und vier über jeweils eine Stützvorrichtung (16) an der Basis (12) angeordnete und aus einer Transportstellung in eine Arbeitsstellung des Fahrgestelles (10), und umgekehrt, verbringbare Räder (14), wobei jede Stützvorrichtung (16) einen Stütz- oder Tragarm (18), der über ein proximales Ende (20) an der Basis (12) aus der Transportstellung in die Arbeitsstellung des Fahrgestelles, und umgekehrt, verschwenkbar angeordnet ist,
eine erste Betätigungseinrichtung (30) zum Verschwenken des Stütz- oder Tragarmes (18) aus der Transportstellung in die Arbeitsstellung des Fahrgestelles, und umgekehrt,
einen an dem distalen Ende (22) des Stütz- oder Tragarmes (18) angeordneten Achsschenkel (24),
eine Radachse (40), die an dem Achsschenkel (24) verschwenkbar angeordnet ist und an einem distalen Ende (42) des Achsschenkels (24) das Rad (14) drehbar aufnimmt, und eine zweite Betätigungseinrichtung (44) zum Verschwenken der Radachse (40) gegenüber dem Achsschenkel (24)
umfasst, **dadurch gekennzeichnet, dass** der Achsschenkel (24) an dem distalen Ende (22) des Stütz- oder Tragarmes (18) drehbar angeordnet ist.

2. Fahrgestell nach Anspruch 1, **dadurch gekennzeichnet, dass** der Stütz- oder Tragarm (18) an der Basis (12) mit dem proximalen Ende (20) über eine erste Drehachse (26) aus der Transportstellung in die Arbeitsstellung des Fahrgestelles (10), und umgekehrt, drehbar angeordnet ist und mit dem Achsschenkel (24) an dem distalen Ende (22) über eine zweite Drehachse (28) drehbar verbunden ist.

3. Fahrgestell nach Anspruch 1 oder 2, **dadurch gekennzeichnet, dass** die erste Betätigungseinrichtung (30) zum Verschwenken des Stütz- oder Tragarmes (18) aus der Transportstellung in die Arbeitsstellung des Fahrgestelles (10), und umgekehrt, an der Basis (12) mit einem proximalen Ende (32) über eine erste Drehachse (36) drehbar angeordnet ist und mit dem Achsschenkel (24) an einem distalen Ende (34) über eine zweite Drehachse (38) drehbar verbunden ist.

4. Fahrgestell nach einem der Ansprüche 1 bis 3, **dadurch gekennzeichnet, dass** die zweite Drehachse (28) von Stütz- oder Tragarm (18) und Achsschenkel (24) und die zweite Drehachse (38) von erster Betätigungseinrichtung (30) und Achsschenkel (24) zusammenfallen.

5. Fahrgestell nach einem der Ansprüche 1 bis 4, **dadurch gekennzeichnet, dass** die erste Betätigungseinrichtung (30) und/oder die zweite Betätigungseinrichtung (44) längenverstellbar ausgebildet ist/sind.

6. Fahrgestell nach einem der Ansprüche 1 bis 5, **dadurch gekennzeichnet, dass** die erste Betätigungseinrichtung (30) und/oder die zweite Betätigungseinrichtung (44) hydraulisch, pneumatisch, mechanisch oder elektrisch längenverstellbar ausgebildet ist/sind.

7. Fahrgestell nach einem der Ansprüche 1 bis 6, **dadurch gekennzeichnet, dass** die erste Betätigungseinrichtung (30) und/oder die zweite Betätigungseinrichtung (44) als, insbesondere teleskopierbare/r, Druckzylinder, Hydraulikeinheit, Lineareinheit, Spindeleinheit oder Linearmotor ausgebildet ist/sind.

8. Fahrgestell nach einem der Ansprüche 1 bis 7, **dadurch gekennzeichnet, dass** jede Stützvorrichtung (16) weiter eine Parallelführung (50) umfasst, welche dem Stütz- oder Tragarm (18) zugeordnet ist, mit einem proximalen Ende (52) an der Basis (12) drehbar angeordnet ist und an einem distalen Ende (54) mit dem Achsschenkel (24) drehbar verbunden ist.

9. Fahrgestell nach Anspruch 8, **dadurch gekennzeichnet, dass** die Parallelführung (50) zwischen Stütz- und Tragarm (18) und der Längsachse (48) des Fahrgestelles (10), insbesondere im Wesentlichen parallel zu dem Stütz- und Tragarm (18), angeordnet ist.

10. Fahrgestell nach einem der Ansprüche 8 oder 9, **dadurch gekennzeichnet, dass** die Parallelführung (50) und der Stütz- und Tragarm (18) zusammen mit der Basis (12) und dem Achsschenkel (24) etwa die Form eines Parallelogramms bilden.

11. Fahrgestell nach Anspruch 3 und nach einem der Ansprüche 8 bis 10, **dadurch gekennzeichnet, dass** eine erste Drehachse (56) von Parallelführung (50) und Basis (12) und die erste Drehachse (36) von erster Betätigungseinrichtung (30) und Basis (12) zusammenfallen.

12. Fahrgestell nach einem der Ansprüche 1 bis 11, **dadurch gekennzeichnet, dass** die Räder (14) und/oder die erste Betätigungseinrichtung (30) und/oder zweite Betätigungseinrichtung (44) individuell, paarweise oder sämtlich gemeinsam steuerbar ausgebildet ist/sind.

13. Fahrgestell nach einem der Ansprüche 1 bis 12, **dadurch gekennzeichnet, dass** die Basis (12) einen Drehteller (46), Drehkranz oder dergleichen Lagereinrichtung aufweist, über den ein Aufbau, Drehturm, Arbeitskorb, Arbeitsplattform oder sonstige Hebeeinrichtung für den Transport von Personen und Werkzeugen drehbar anordnenbar ist.

14. Verfahren zum Betrieb einer mobilen oder selbstfahrenden Arbeitsmaschine, Arbeitsbühne oder dergleichen mit einem Fahrgestell nach einem der Ansprüche 1 bis 13, **dadurch gekennzeichnet, dass** die Räder (14) an Stützvorrichtungen (16) jeweils über einen an einem distalen Ende (22) eines Stütz- oder Tragarmes (18) der Stützvorrichtungen (16) drehbar angeordneten Achsschenkel (24) zur Breitenverstellung des Fahrgestelles (10) oder zum Verbringen des Fahrgestelles (10) aus der Transportstellung in die Arbeitsstellung, und umgekehrt, in einen Winkel zu der Längsachse (48) des Fahrgestelles (10) ausgerichtet werden, derart, dass die Räder (14) jeweils, im Wesentlichen auf oder parallel zu einem Teilkreis, um welchen/auf welchem die Stützvorrichtungen (16) verschwenkt oder bewegt werden, geführt oder ausgerichtet werden.

15. Verwendung eines Fahrgestelles nach einem der Ansprüche 1 bis 13 für mobile, fahrbare, heb- und senkbare, selbstfahrende Arbeitsmaschinen, Arbeitsbühnen, Arbeitskörbe, Arbeitsplattformen, Bagger, Maschinen zum Ausbaggern, Schreitbagger, Baugeräte und -maschinen, Boom Lifts, Erdbaumaschinen, Erdbohrer, Hebebühnen, Hebeeinrichtungen für den Transport von Personen und Gütern, Hebewerke, Hubarbeitsbühnen, Hubplattformen, Hubtische, Kräne, Drehkräne, Bau- und Lastkräne, Lastwagenkräne, Laufkräne, Portalkräne, Turmdrehkräne, Kran- oder Werkzeugaufsätze oder Halterungen für Werkzeugmaschinen.

## Claims

1. Chassis comprising a base (12) and four wheels (14) each being mounted on the base (12) by way of a respective supporting device (16) and each being capable of being brought out of a transport position into an operating position of the chassis (10), and vice versa, wherein each supporting device (16) comprises:
A support or carrier arm (18), which is arranged on the base (12) via a proximal end (20) to be pivotable out of the transport position into the operating position of the chassis, and vice versa,
a first control (30) for pivoting the support or carrier arm (18) out of the transport position into the operating position of the chassis, and vice versa,
an axle journal (24) arranged at the distal end (22) of the support or carrier arm (18),
a stub axle (40), which is pivotably arranged on the axle journal (24) and receives the wheel (14) for rotation at a distal end (42) of the axle journal (24), and
a second control (44) for pivoting the stub axle (40) against the axle journal (24),
**characterized in that** the axle journal (24) is rotatably arranged at the distal end (22) of the support or carrier arm (18).

2. Chassis according to claim 1, **characterized in that** the support or carrier arm (18) is rotatably arranged at the base (12) with the proximal end (20) via a first axis of rotation (26) from the transport position to the operating position of the chassis (10), and vice versa, and is rotatably connected to the axle journal (24) at the distal end (22) via a second axis of rotation (28).

3. Chassis according to claim 1 or 2, **characterized in that** the first control (30) for pivoting the support or carrier arm (18) from the transport position into the operating position of the chassis (10), and vice versa, is rotatably arranged on the base (12) with a proximal end (32) via a first axis of rotation (36) and is rotatably connected to the axle journal (24) at a distal end (34) via a second axis of rotation (38).

4. Chassis according to one of claims 1 to 3, **characterized in that** the second axis of rotation (28) of support or carrier arm (18) and axle journal (24) and the second axis of rotation (38) of first control (30) and axle journal (24) coincide.

5. Chassis according to one of claims 1 to 4, **characterized in that** the first control (30) and/or the second control (44) is/are designed to be adjustable in length.

6. Chassis according to one of claims 1 to 5, **characterized in that** the first control (30) and/or the second control (44) is/are designed to be hydraulically, pneumatically, mechanically or electrically length-adjustable.

7. Chassis according to one of claims 1 to 6, **characterized in that** the first control (30) and/or the second control (44) is/are designed as a, in particular telescopic, pressure cylinder, hydraulic unit, linear unit, spindle unit or linear motor.

8. Chassis according to one of claims 1 to 7, **characterized in that** each supporting device (16) further comprises a parallel guide (50) assigned to the support or carrier arm (18), rotatably arranged at a proximal end (52) on the base (12) and rotatably connected at a distal end (54) to the axle journal (24).

9. Chassis according to claim 8, **characterized in that** the parallel guide (50) is arranged between the support and carrier arm (18) and the longitudinal axis (48) of the chassis (10), in particular substantially parallel to the support and carrier arm (18).

10. Chassis according to one of claims 8 or 9, **characterized in that** the parallel guide (50) and the support and carrier arm (18) together with the base (12) and the axle journal (24) form approximately the shape of a parallelogram.

11. Chassis according to claim 3 and to one of claims 8 to 10, **characterized in that** a first axis of rotation (56) of parallel guide (50) and base (12) and the first axis of rotation (36) of first control (30) and base (12) coincide.

12. Chassis according to one of claims 1 to 11, **characterized in that** the wheels (14) and/or the first control (30) and/or second control (44) is/are designed to be controllable individually, in pairs or all together.

13. Chassis according to one of claims 1 to 12, **characterized in that** the base (12) has a turntable (46), slewing ring or similar bearing device, via which a superstructure, revolving tower, work cage, work platform or other lifting device for the transport of persons and tools can be arranged in a rotatable manner.

14. Method of operating a mobile or self-propelled working machine, working platform or the like having a chassis according to one of claims 1 to 13, **characterized in that** the wheels (14) on supporting devices (16) are each aligned by an axle journal (24) rotatably arranged at a distal end (22) of a support or carrier arm (18) of the supporting devices (16) for adjusting the width of the chassis (10) or for moving the chassis (10) from the transport position to the operating position, and vice versa, at an angle to the longitudinal axis (48) of the chassis (10) in such a way that the wheels (14) are each guided or aligned, substantially on or parallel to a pitch circle, about which/on which the supporting devices (16) are pivoted or moved.

15. Use of a chassis according to one of claims 1 to 13 for mobile, movable, lifting and lowering, self-propelled working machines, working platforms, working cages, working platforms, excavators, machines for dredging, walking excavators, construction equipment and machines, boom lifts, earth-moving machines, earth drills, lifting platforms, lifting equipment for the transport of people and goods, hoists, aerial work platforms, lifting platforms, lifting tables, cranes, slewing cranes, construction cranes, truck cranes, overhead cranes, gantry cranes, tower cranes, crane or tool attachments or mounts for machine tools.

## Revendications

1. Châssis comprenant une base (12) et quatre roues (14) agencées chacune sur la base (12) par l'intermédiaire d'un dispositif de soutien (16) et pouvant être déplacées d'une position de transport à une position de travail du châssis (10), et inversement, chaque dispositif de soutien (16) comprenant
un bras de soutien ou de support (18) qui est agencé par une extrémité proximale (20) sur la base (12) de manière à pouvoir pivoter de la position de transport à la position de travail du châssis, et inversement,
un premier dispositif d'actionnement (30) pour faire pivoter le bras de soutien ou de support (18) de la position de transport à la position de travail du châssis, et inversement,
une fusée d'essieu (24) agencée à l'extrémité distale (22) du bras de soutien ou de support (18),
un essieu de roue (40) qui est agencé sur la fusée d'essieu (24) de manière à pouvoir pivoter et qui reçoit la roue (14) de manière rotative à une extrémité distale (42) de la fusée d'essieu (24), et
un deuxième dispositif d'actionnement (44) pour faire pivoter l'essieu de roue (40) par rapport à la fusée d'essieu (24),
**caractérisé en ce que** la fusée d'essieu (24) est agencée de manière rotative à l'extrémité distale (22) du bras de soutien ou de support (18).

2. Châssis selon la revendication 1, **caractérisé en ce que** le bras de soutien ou de support (18) est agencé par l'extrémité proximale (20) sur la base (12) de manière rotative par l'intermédiaire d'un premier axe de rotation (26) de la position de transport à la position de travail du châssis (10), et inversement, et est relié par l'extrémité distale (22) à la fusée d'essieu (24) de manière rotative par l'intermédiaire d'un deuxième axe de rotation (28).

3. Châssis selon la revendication 1 ou 2, **caractérisé en ce que** le premier dispositif d'actionnement (30) conçu pour faire pivoter le bras de soutien ou de support (18) de la position de transport à la position de travail du châssis (10), et inversement, est agencé par une extrémité proximale (32) sur la base (12) de manière rotative par l'intermédiaire d'un premier axe de rotation (36) et est relié par une extrémité distale (34) à la fusée d'essieu (24) de manière rotative par l'intermédiaire d'un deuxième axe de rotation (38).

4. Châssis selon l'une des revendications 1 à 3, **caractérisé en ce que** le deuxième axe de rotation (28) du bras de soutien ou de support (18) et de la fusée d'essieu (24) et le deuxième axe de rotation (38) du premier dispositif d'actionnement (30) et de la fusée d'essieu (24) sont confondus.

5. Châssis selon l'une des revendications 1 à 4, **caractérisé en ce que** le premier dispositif d'actionnement (30) et/ou le deuxième dispositif d'actionnement (44) est/sont conçu(s) pour être réglable(s) en longueur.

6. Châssis selon l'une des revendications 1 à 5, **caractérisé en ce que** le premier dispositif d'actionnement (30) et/ou le deuxième dispositif d'actionnement (44) est/sont conçu (s) pour être réglable (s) en longueur par voie hydraulique, pneumatique, mécanique ou électrique.

7. Châssis selon l'une des revendications 1 à 6, **caractérisé en ce que** le premier dispositif d'actionnement (30) et/ou le deuxième dispositif d'actionnement (44) est/sont conçu(s) comme un vérin de pression, une unité hydraulique, une unité linéaire, une unité à broche ou un moteur linéaire, en particulier télescopique.

8. Châssis selon l'une des revendications 1 à 7, **caractérisé en ce que** chaque dispositif de soutien (16) comprend en outre un guide parallèle (50) associé au bras de soutien ou de support (18), monté par une extrémité proximale (52) de manière rotative sur la base (12) et relié par une extrémité distale (54) de manière rotative à la fusée d'essieu (24) .

9. Châssis selon la revendication 8, **caractérisé en ce que** le guide parallèle (50) est agencé entre le bras de soutien et de support (18) et l'axe longitudinal (48) du châssis (10), en particulier sensiblement parallèlement au bras de soutien et de support (18).

10. Châssis selon l'une des revendications 8 ou 9, **caractérisé en ce que** le guide parallèle (50) et le bras de soutien et de support (18) constituent, conjointement avec la base (12) et la fusée d'essieu (24), sensiblement la forme d'un parallélogramme.

11. Châssis selon la revendication 3 et l'une des revendications 8 à 10, **caractérisé en ce qu'**un premier axe de rotation (56) du guide parallèle (50) et de la base (12) et le premier axe de rotation (36) du premier dispositif d'actionnement (30) et de la base (12) sont confondus.

12. Châssis selon l'une des revendications 1 à 11, **caractérisé en ce que** les roues (14) et/ou le premier dispositif d'actionnement (30) et/ou le deuxième dispositif d'actionnement (44) est/sont conçu(s) pour être commandé(s) individuellement, par paire ou tous conjointement.

13. Châssis selon l'une des revendications 1 à 12, **caractérisé en ce que** la base (12) comporte un plateau tournant (46), une couronne de rotation ou un dispositif de montage similaire, permettant d'agencer de manière rotative une superstructure, une tour rotative, une nacelle, une plate-forme de travail ou un autre dispositif de levage pour le transport de personnes et d'outils.

14. Procédé de fonctionnement d'une machine de travail, d'une plate-forme de travail, ou similaire, mobile ou automotrice, comprenant un châssis selon l'une des revendications 1 à 13, **caractérisé en ce que** les roues (14) agencées sur des dispositifs de soutien (16) sont orientées chacune selon un angle par rapport à l'axe longitudinal (48) du châssis (10), par l'intermédiaire d'une fusée d'essieu (24) agencée de manière rotative sur une extrémité distale (22) d'un bras de soutien ou de support (18) des dispositifs de soutien (16) pour le réglage en largeur du châssis (10) ou pour le déplacement du châssis (10) de la position de transport à la position de travail, et inversement, de telle sorte que les roues (14) sont guidées ou orientées chacune sensiblement sur ou parallèlement à un cercle primitif autour duquel ou sur lequel les dispositifs de support (16) sont pivotés ou déplacés.

15. Utilisation d'un châssis selon l'une des revendications 1 à 13, pour des machines de travail, des plateformes de travail, des nacelles, mobiles, déplaçables, susceptibles d'être levées et abaissées, automotrices, des excavateurs, des machines pour le dragage, des pelles araignées, des engins et machines de chantier, des élévateurs à flèche, des engins de terrassement, des tarières, des plates-formes élévatrices, des équipements de levage pour le transport de personnes et de marchandises, des élévateurs, des plates-formes élévatrices de travail, des tables élévatrices, des grues, des grues tournantes, des grues de chantier et des camions-grues, des ponts roulants, des portiques, des grues à tour, des potences ou des porte-outils pour machines-outils.
